# NEUE EUROPÄISCHE PATENTSCHRIFT

(11) **EP 0 336 939 B3**
(45) Veröffentlichungstag dieser Patentschrift: **27.08.2008**
(45) Hinweis auf die Patenterteilung: 14.06.1995
(21) Anmeldenummer: 88908134.5
(22) Anmeldetag: 06.10.1988
(51) Int. Cl.: B02C 4/06, B02C 9/04

(54) **VERFAHREN ZUR HERSTELLUNG EINES STÄRKEROHMATERIALES SOWIE STÄRKEMÜHLENANLAGE**
PROCESS FOR MANUFACTURING A RAW STARCH MATERIAL AND STARCH MILL
PROCEDE DE FABRICATION DE L'AMIDON BRUT ET MOULIN A AMIDON

(30) Priorität: 06.10.1987 CH 389387
(43) Veröffentlichungstag der Anmeldung: 18.10.1989
(73) Patentinhaber: Bühler AG, 9240 Uzwil (CH)
(72) Erfinder: BALTENSPERGER, Werner, CH-9242 Oberuzwil (CH); LIPPUNER, Christian, CH-9244 Niederuzwil (CH)
(74) Vertreter: Samson & Partner
(86) Internationale Anmeldenummer: PCT/CH1988/000183
(87) Internationale Veröffentlichungsnummer: WO 1989/003246

(56) Entgegenhaltungen:
- WO-A1-86/01128
- DE-A1- 2 642 628
- DE-A1- 2 730 166
- US-A- 1 396 712
- US-A- 2 742 235
- US-A- 2 986 348
- US-A- 4 220 287

## Beschreibung

### Technisches Gebiet

Die Erfindung betrifft ein Verfahren zur Herstellung eines Stärkerohmateriales für die anschliessende Gewinnung von reiner Stärke aus Weizen, wobei durch Walzenvermahlung und Siebeinrichtungen Fraktionen von möglichst wenig geschädigter Stärke hergestellt werden, wobei mit dem System der Hochmüllerei das Gut wiederholt vermahlen und gesiebt wird.

### Stand der Technik

Die jüngere Entwicklung in der Stärkeherstellung wurde bestimmt durch zwei wesentliche Erkenntnisse, die sehr viel zur ökonomischen Herstellung beitrugen. Als erstes wurde erkannt, dass Stärkekörner, die während der Vermahlung beschädigt werden, die anschliessende Ausbeute an reiner Stärke in der Stärkefabrik verschlechtern. Wird zum Bei- spiel bei der Teigwarenherstellung die Stärke beschädigt, so tritt der Inhalt der beschädigten Stärkekörner beim Kochen als Verlust in das Kochwasser, und gibt dem Kochwasser auch einen milchig-weissen Farbton. Das gleiche gilt aber auch bei der Stärkeherstellung. Die Stärke kann wirtschaftlich nur auf die Weise von dem Kleber getrennt werden, indem die an sich schon fadenförmigen Proteinkörper zu einem Proteingerüst (Klebergerüst) aufgebaut werden. Dies geschieht Ober die Teigbildung ähnlich wie bei Teigwaren. Die Stärkekristalle können dann durch zusätzliches Wasser aus dem Proteingerüst ausgeschwemmt und separiert werden. Im Gegensatz dazu wünscht der Bäcker beim Brotmehl eine Beschädigung der Stärke, damit für die Brotteigbildung das Mehl rasch und viel Wasser aufnehmen kann.

Die zweite Erkenntnis lag darin, die für die Vermahlung verwendete Anzahl an Mahlpassagen möglichst tief zu halten, was erlaubte, die Anlageinvestition für die Mühle tief zu halten. Die Lösung entsprechend dieser beiden Erkenntnisse ist in der DE-PS Nr. 2 642 628 der Anmelderin beschrieben. Bei diesem Stand der Technik werden zehn bis zwölf Mahlpassagen verwendet.

### Darstellung der Erfindung

Der Erfindung wurde nun die Aufgabe gestellt, eine weitere Reduzierung der Investition für eine Stärkemühle zu erzielen, jedoch bei Sicherstellung der Produktqualität, insbesondere der für die Stärkefabrik benötigten Fraktionen, ganz besonders die schwere, die A-Stärke enthaltende Fraktion, ebenso aber die Gesamtstärke, enthaltend A- und B-Stärke.

Die erfindungsgemässe Lösung ist dadurch gekennzeichnet, dass das Gut wenigstens zwei mal Ober Doppelmahlstufen ohne Siebung zwischen den Doppelvermahlungen geführt wird und anschliessend an die Doppelvermahlung jeweils gesiebt wird.

Ueberraschenderweise für die Fachwelt konnte die Aufgabe voll erfüllt und gleichzeitig die Voraussetzung geschaffen werden für einen weiteren Entwicklungsschritt für die Rohmaterialaufbereitung zur Stärkegewinnung. Dazu war es notwendig, sich von der traditionellen Einstellung der müllerischen Praxis der bisherigen Hochmüllerei völlig zu lösen. Es trifft nach wie vor zu, dass für die Erzielung von Maximalresultaten bezüglich aller übliche Mahlprodukte die Vermahlung äusserst schonend und deshalb vielstufig durchgeführt werden muss: Oeffnen des Komes, Lösen der Endospermteile, schonendes Vermahlen der groben Griessteile, Erzeugen der notwendigen Feinfraktion ohne Stärkebeschädigung usw. Durch den bau von spezialisierten Mühlen kann - dies hat nun die neueste Erkenntnis gezeigt - wohl nicht auf die Mahlstufen an sich, jedoch auf einen Teil der Zwischensiebung verzichtet werden, ohne dass dadurch eine Reduzierung der Qualität und der Ausbeute der für die Stärkeherstellung benötigten Fraktion eintritt, dies bei gleichem Gesamtdurchsatz durch die Mühle. Das bedeutet, dass die Vermahlung weiterhin in vielen Stufen und sehr schonend erfolgt.

Der Verzicht auf einen wesentlichen Teil der Zwischensichtung (auf fast die Hälfte) erspart alle für den Transport bisher hierfür benötigten Förderelemente, Filter usw., sodass bei konsequenter Anwendung des neuen Erfindungsgedankens eine Mühle wesentlich preisgünstiger zu stehen kommt. Insbesondere ist auch der Betrieb einer zur Durchführung des erfindungsgemäßen Verfahrens ausgebildeten Mühle ökonomischer durch die Verringerung der zu wartenden Einrichtungen und Reduzierung der Förder- und Antriebsenergie. Zudem kann spürbar durch die Verringerung des Gebäudevolumens gespart werden.

Die neue Erfindung erlaubt verschiedene besonders vorteilhafte Ausgestaltungen.

Ganz besonders bevorzugt wird das Gut zwei bis vier mal, ganz besonders bevorzugt vier mal, doppelt vermahlen. Dies bedeutet den Einsatz von acht Mahlwalzenpaaren, die aus Grob- und Feinriffel- sowie Glattwalzen bestehen können, wie dies in der bekannten Hochmüllerei üblich ist. Die eigentlichen Siebpassagen reduzieren sich auf ebenfalls vier, was gegenüber dem Stand der Technik eine Reduzierung der Siebpassagen auf 40 bis 50 % bedeutet.

Je nachdem was für die Vermahlung an Rohmaterialien verwendet werden, besonders bei schwieriger zu verarbeitendem Gut, kann es aber doch noch von Vorteil sein, für die Ausmahlung drei bis fünf einfache Vermahlungen mit je einer Zwischensiebung vorzusehen. Selbstverständlich kann dies auf die Weise erfolgen, dass die entsprechenden Walzenstühle zwar installiert, jedoch nur von Fall zu Fall in Betrieb gesetzt werden, sodass jedes unnötige "Handling" des Gutes vermieden und in jedem Fall das Maximum an schonender Behandlung sichergestellt wird.

Ferner wird vorgeschlagen, dass das Gut zumindest bei B₁/B₂, B₃/B₄, C₁/C₂ und C₃/C₄ doppelt vermahlen wird.

Die neue Erfindung erlaubt damit nicht nur eine enorme verfahrenstechnische Reduktion, sondern effektiv auch eine Reduktion der benötigten Maschinen und somit des gesamten Bauvolumens. Damit aber konnte ein kaum erwarteter Fortschritt für den Bau und Betrieb von Stärkemühlenanlagen erreicht werden.

Mit der neuen Lösung ist es ferner möglich, zum Beispiel für den Umbau von bestehenden Stärkemühlen, drei bis fünf der bisher verwendeten Vier-Walzenstühle zu benutzen (also sechs bis zehn Walzenpaare), wobei je zwei Mahlpassagen ohne Zwischensichtung direkt nacheinander geschaltet sind. Zweckmässig ist es aber, alle Walzenstühle auf demselben Boden direkt nebeneinander anzuordnen, ohne Absatz.

Dagegen wird es für Neuanlagen wesentlich vorteilhafter sein, dass die Mühle ein oder bevorzugt zwei Achtwalzenstühle (Walzenstühle mit 8 Walzen) mit zwei mal übereinanderliegenden Mahlwalzenpaaren aufweist. Grosse Stärkemühlen werden einfach durch entsprechende Parallelführung der Arbeitsmaschinen vergrössert, also z.Bsp. für doppelte Durchsatzleistung - doppelte Anzahl Aggregate.

Ersichtlich erreicht damit die Müllerei für Stärkemühlenanlagen einen Punkt, wo in Bezug auf die verwendeten Aggregaten nahezu der Stand der ganz alten Flachmüllerei wieder erreicht wird (zwei bis drei Mahlgänge), jedoch nahezu alle Vorteile der Hochmüllerei beibehalten werden können.

Die neue Erfindung ermöglicht ferner eine ganze Anzahl besonders vorteilhafter Ausgestaltungen sowie eine beachtliche Vielfalt von Variationen. So ist es möglich, konsequent nur Doppelvermahlungen ohne Zwischensiebung zwischen den einzelnen Doppelvermahlungen anzuwenden. Dies ergibt einen sehr konzentrierten Produktionsablauf. In schwierigen Fällen ist es aber auch möglich, in der Ausmahlung z.Bsp. eins bis fünf Einfachvermahlungen mit je einer Zwischensiebung vorzusehen. Dies hat den Vorteil, dass selbst bei schwierig zu vermahlenden Kornmischungen eine sehr hohe Ausbeute und Reinheit des Endproduktes gewonnen werden kann.

Als Stand der Technik gilt heute bei Mehlmühlen etwa fünfzehn Einzelpassagen, bei Stärkemühlen ca. zehn bei zwölf Einzelpassagen. Gemäss der neuen Erfindung ist es möglich, mit vier bis fünf Doppelmahlpassagen, also total mit acht bis zehn Mahlpassagen, ganz besonders bevorzugt aber mit acht Mahlpassagen also zwei Achtwalzwerken auszukommen. Dabei ist ersichtlich, dass die Walzenpaare in der Zahl verringert, besonders jedoch das "Handling" wie Sieben, Transportieren usw. fast halbiert werden konnte.

Eine kleine Mühle kann somit mit zwei gegebenenfalls drei Achtwalzenstühlen gebaut werden, welche zwei mal je zwei übereinanderliegende Mahlwalzenpaare aufweisen, oder zum Beispiel mit zwei AchtwalzenstUhlen und ein oder zwei Vierwalzenstühlen ausgerüstet werden.

Bevorzugt weist jedes Mahlwalzenpaar je eine eigene Mahlspaltverstellung auf, sodass von dem rein müllerischen Ansatz die Arbeitsweise der Mahlwalzen an sich nur unwesentlich verändert ist, z.Bsp. gegenüber der DE-PS 2 640 628.

Ferner wird vorgeschlagen, dass bei den Achtwalzenstühlen die obenliegenden Walzenpaare je eine einstellbare Speiseregelung aufweisen, sowie eine trichterförmige Produktführung zur direkten Uebergabe von dem jeweils oben liegenden Walzenpaar an das untere Walzenpaar.

Da auch mit der neuen Erfindung die fachkundige Führung einer Mühle wichtig ist, soll der verantwortliche Müller neu ebenfalls entsprechende Kontroll- und Einflussmöglichkeiten haben wie bisher. Es wird deshalb jedem Walzenpaar eine Mahlspalteinstellvorrichtung sowie auch je eine Kontrolltüre zur Musterentnahme nach jeder Mahlpassage zugeordnet. Die Voraussetzung, dass das Müllern ein Kunsthandwerk bleibt, gleich etwa wie bei dem Kochen, ist damit gewährleistet.

Für den sicheren Betrieb wird ebenfalls sowohl der Speiseraum des oberen Walzenpaares wie der Speiseraum des unteren Walzenpaares bei den Achtwalzwerken insbesondere der Bereich des Mahlspaltes über Kanäle an eine Aspiration angeschlossen. Dies erlaubt auch eine hohe Durchsatzleistung und stabile Mahlverhältnisse.

Ferner soll jedes Walzenpaar vollständig mit individueller Einstelleinrichtung sowie Fremdkörpersicherung ausgerüstet sein und die Walzen jedes Walzenpaares bevorzugt je unterschiedliche Umlaufgeschwindigkeiten, wobei den je übereinanderliegenden Walzepaaren je eine gemeinsam gesteuerte Ausrückvorrichtung zugeordnet werden soll.

Ganz besonders bevorzugt werden die Walzen eines Walzenpaares auf dieselbe horizontale Ebene angeordnet.

In Weiterführung der Erfindungsides wird ganz besonders bevorzugt ein Plansichter mit grösserer Einzelsiebfläche ein sogenannter Grossplansichter verwendet mit ca. 30 bis 60 %, vorzugsweise 40 bis 50 % grösserer Siebfläche in Bezug auf die bekannten Plansichtersiebe, welche zu den 4-Walzenstühlen heute verwendet werden. Dies führt dazu, dass eine Mühle von etwa 100 bis 200 Tonnen Tagesverarbeitungskapazität z.Bsp. zwei Achtwalzwerke und einen einzigen Grossplansichter aufweist. In Ergänzung dazu wird auch für die Reinigung eine Kompaktreinigung nach der CH-PA Nr. 04 626/87-6 der Anmelderin verwendet, sodass dadurch tatsächlich eine Kompaktstärkemühle entsteht, mit im Prinzip allen wesentlichen Vorteilen der bisherigen Stärkemühlen, jedoch einer nicht erwarteten Reduktion die Zahl der benötigten Aggregate sowie des erforderlichen Raumes. Der gesamte inhalt der CH-PA Nr. 04 626/87-6 ist integrierender Bestandteil der neuen efindungsgemässen Lösung.

Eine Grundeinheit einer Stärkemühle mit entsprechender Tagesleistung weist dabei eine Kompaktreinigung, zwei Achtwalzenstühle sowie einen Grossplansichter auf.

Für die optimale Führung einer neuen Stärkemühle werden die Mahlspaltverstelleinrichtungen je einer Fernsteuerung zugeordnet und Rechnermittel zur Speicherung und Wiederabrufung der für jede Mahlaufgabe spezifischen Mahlspalteinstellungen sowie aller übrigen Einstellwerte der Verarbeitungs- und Transportmittel vorgesehen.

Ist das Rohmaterial bzw. die Mischung bestimmt, ebenso die übrigen Parameter wie Umgebungstemperatur, Luftfeuchtigkeit. Zustand aller Aggregate (Riffelung der Walzen, Siebbespannung der Plansichter usw.) so kann die Mühle bei einmal guter Einstellung über längere Zeiträume selbst ohne direkte Anwesenheit von Fachpersonal völlig automatisch betrieben werden.

In der Folge wird nun die Erfindung mit weiteren Einzelheiten näher erläutert.

### Kurze Beschreibung der Erfindung

Dabei zeigen
- die Fig. 1: ein Achtwalzenstuhl,
- die Fig. 2: eine halbe Ansicht der Fig. 1 mit den Verstellmitteln sowie dem Antrieb,
- die Fig. 3: eine neue Stärkemühle,
- die Fig. 4: die Mahl- und Siebeinheit und
- die Fig. 5: diagrammatisch das neue Mahlverfahren.

### Wege zur Ausführung der Erfindung

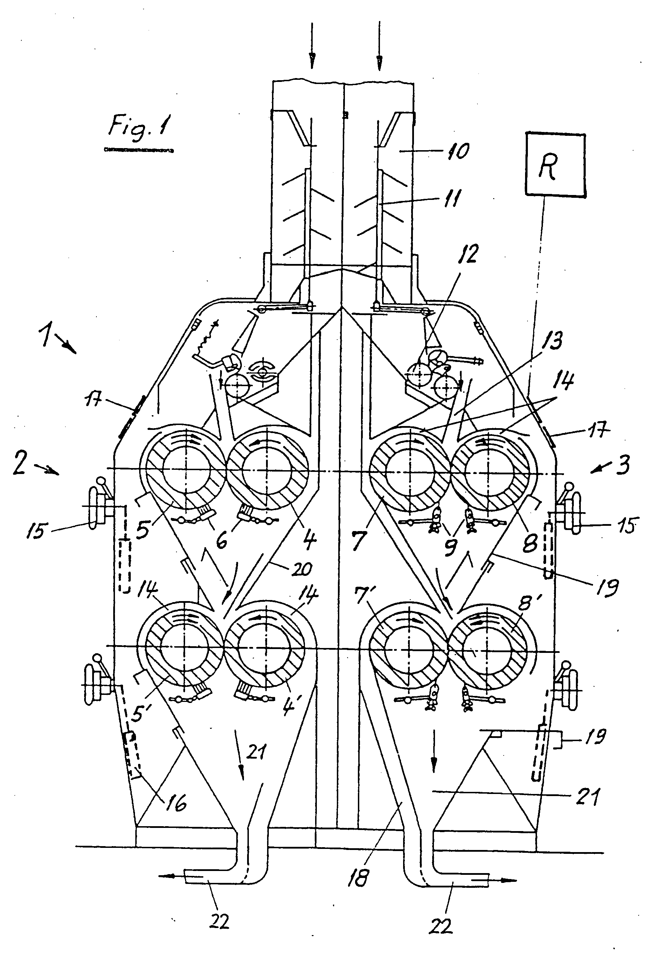

Es wird nun auf die Fig. 1 Bezug genommen. Der Achtwalzenstuhl 1 besteht aus zwei Hälften, die linke Hälfte ist als Schrotpassage 2 und einer rechten Hälfte als Ausmahlpassage 3 dargestellt. Die Schrotpassagen 2 haben meistens Riffelwalzen 4 resp. 5, wobei im Bild die schneller laufende Walze 5 mit zwei Pfeilen markiert ist. Unterhalb der Walzen 4 und 5 befindet sich je eine Abstreifbürste 6. Bei den Ausmahlpassagen werden mehrheitlich glatte Walzen 7 resp. 8 und zur Sauberhaltung der Walzenoberfläche Abstreifmesser 9 verwendet. Je nach spezifischer Mahlarbeit wird das jeweils untere Walzenpaar 4', 5' bzw. 7', 8' die gleiche Walzengattung Grobriffel, Feinriffel oder als Glattwalzen ausgebildet sein, wie das entprechende obere.

Das Gut wird Ober einen Speisezylinder 10 links oder rechts in den Walzen stuhl 1 geleitet. Dabei ist es nur bei ganz grossen Mühlenleistungen angezeigt, die linke und die rechte Walzenstuhlhälfte identisch auszuführen, derart, dass beide Hälften je die Hälfte der Gutmenge verarbeiten müssen. In dem Speisezylinder 10 ist ein Sensor 11 im Bild als sogenannter "Christbaum" ausgebildet, der eine Produktspeisung 12 steuert, sodass eine jeweils ankommende Gutmenge, die oben beim Speisezylinder 10 zufliesst, in gleicher Grösse durch die Produktspeisung ausgetragen wird. Das Gut wird über einen Speisekanal 13 direkt in den Mahlspalt geleitet. Eine starke Luftströmung wird in den Speisekanal 13 erzeugt, was vorteilhafterweise durch zwei um die Walzen 4, 5 bzw. 7, 8 herumgeführte Luftkanäle 14 sichergestellt werden kann. Das vom oberen Walzenpaar 4, 5 geschrotete Gut wird über einen Produktabführtrichter 21 direkt in den Mahlspalt des unteren Walzenpaares 4', 5' geleitet. Auch beim unteren Walzenpaar 4', 5' wird die Luft durch Luftkanäle 14 aspiriert. Das Mahlgut wird durch einen Produktabführtrichter 21 ein Uebergabeelement den Zwischenüberhebungen übergeben. Alle vier Walzenpaare 4, 5 - 4', 5' - 7, 8 - 7', 8' können durch eine Einstellvorrichtung 15 bezüglich des Mahlspaltes eingestellt werden. Alle übrigen Einrichtungen wie Fremdkörpersicherung, Ein- und Ausrückvorrichtung usw., werden wie bei normalen Vierwalzwerken verwendet. Hierzu wird vollinhaltlich auf die DE-PS 27 30 166 verwiesen. Es hat sich gezeigt, dass die in der erwähnten Veröffentlichung der Anmelderin gezeigte Baueinheit für das Walzenpaar mit grossem Vorteil auch bei den Achtwalzwerken einsetzbar ist, sodass im Falle einer Kombination von Achtwalzwerken und Vierwalzwerken in jedem Fall auf dem gleichen Grundaufbau des sogenannten Walzenpaketes ausgegangen werden kann, was ein weiterer Vorteil für den Hersteller wie für den Anwender ist.

In einzelnen Fällen kann es angezeigt sein, über dem unteren Walzenpaar eine Speisewalze resp. Produktverteilwalze vorzusehen. Bevorzugt aber erfolgt für beide Walzenpaare die Walzenein- und Ausrückung über den gemeinsamen Sensor 11.

Auf der rechten Bildhälfte ist in dem Produktabführtrichter 21 zusätzlich eine Produkt- und Luftführung 18 dargestellt. Dies kann besonders bei dunst- und mehlartigen Mahlgütern Vorteile bringen, da so eine kompaktere Führung des fallenden Produktstromes möglich ist.

Jedes Mahlwalzenpaar (4, 5 - 7, 8) weist je eine eigene Mahlspaltverstelleinrichtung auf, welche aus einem Handrad 15 sowie den entsprechenden Verstellelementen besteht. Zusätzlich kann eine motorische Verstelleinrichtung 16 vorgesehen sein, wobei beide über eine Anzeige 17 den momentanen Abstandswert der zwei Mahlwalzen überwachen können. Ferner kann die motorische Verstellung über Rechner (R) und Speichermittel automatisch erfolgen.

Jedem Mahlwalzenpaar ist ferner eine Kontrolltüre 19 zugeordnet, welche in der rechten Bildhälfte oben in geschlossener und unten in geöffneter Position dargestellt ist. Unabhängig, ob der Walzenstuhl in Betrieb ist oder nicht, kann die Kontrolltüre geöffnet werden. Dabei bleiben durch oben beschriebene zusätzliche Luftkanäle 14, 18 konstante Luftdruckverhältnisse und damit konstante Mahlverhältnisse aufrechterhalten.

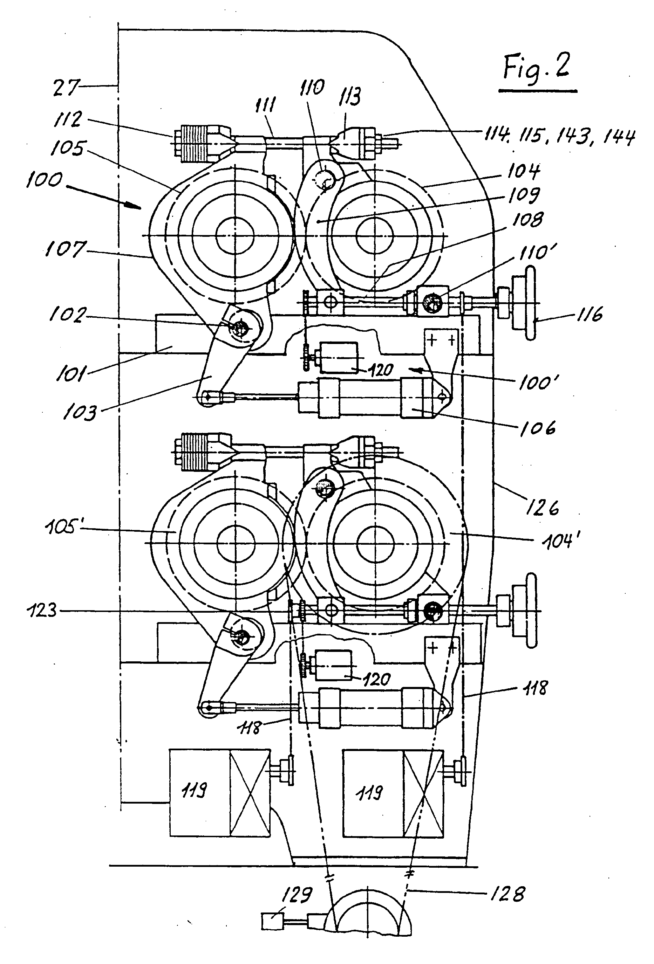

In der Folge wird nun Bezug genommen auf die Fig. 2, in welcher Verstellorgane als eine erste Baugruppe 100 und ein steuerbarer Verstellantrieb als zweite Baugruppe 100' erkennbar ist. Die zwei Mahtwalzen 104 und 105 sind auf einem gemeinsamen Träger 101 abgestützt. Die Loswalze 105 ist an einem ortsfesten Exzenterbolzen 102 verschwenkbar befestigt, wobei die Ein- und Ausrükkung durch einen entsprechenden Hebel 103, sowie einem Ausrückzylinder 106 gesteuert wird. Durch die Verschwenkbewegung des Hebels 103 wird der Exzenterbolzen 102 verdreht und verursacht eine horizontale Verschiebung des unteren Teiles des verschwenkbaren Lagergehäuses 107, sodass damit der Abstand der beiden Mahlwalzen roh eingestellt werden kann. Für die genaue Einstellung der Mahlwalzen wäre diese Einrichtung zu ungenau. Diese wird denn auch nur benutzt, um die Mahlwalzen in eine eingerückte oder ausgerückte Stellung bzw. in zwei fixierte Stellungen zu bringen. Die eigentliche Feineinstellung der Mahlwalzen 104 und 105 geschieht über eine Verstellspindel 108, welche durch Drehung direkt einen Einstellarm 109 um ein ortsfestes Drehlager 110 bewegt. Das obere, kürzere Ende des Einstellarmes 109 ist Ober Zugstange 111 kraftschlüssig mit dem verschwenkbaren Lagergehäuse 107 verbunden. Die Kraftübertragung erfolgt über Schneiden, die auf der einen Seite Teil einer Ueberlast-Federsicherung 112 ist. Auf der gegenüberliegenden Seite ist an der Zugstange 111 ein einstellbarer Gegen-Haltekopf 113, sowie eine Druckmesseinrichtung 114 mit Druckanzeigevorrichtung 115 angeordnet. Um bei Servicearbeiten die Mahlwalzen parallel einstellen zu können, kann eine Korrektur auf der jeweils erforderlichen Seite über Einstellschrauben 143, 144 vorgenommen werden. Die Verstellspindel 108 ist durch Lager 110' ortsfest gehalten und kann nun über ein Handrad 116, welches eine direkt eingebaute Anzeigeuhr aufweist, oder aber Ober motorische Mittel, Uebertriebskette 118 sowie einem Getriebemotor, bzw. Antriebsmotor 119 betätigt werden. Der Antriebsmotor 119 ist am Walzenstuhl 126 befestigt und ist über eine Rutschkupplung und einem Kettenrad in direkter Verbindung mit der Verstellspindel 108.

Direkt mit der Uebertriebskette 118 ist ferner ein Positionsmelder 120 in direkter Verbindung, sodass jede Bewegung des Kettenrades 123 in dem Positionsmelder 120 registriert und an die gewünschten Stellen weitergeleitet wird. In Fig. 2 ist ferner ein Antriebsriemen 128 für den Antrieb der Mahlwalzen 104 und 105 resp. 104' und 105' nur angedeutet. Es ist möglich, auch in das Antriebssystem ein elektrisches Leistungsbedarfs-Mess- und Anzeigegerät 129 vorzusehen. Damit kann zum Beispiel die elektrische Leistungsaufnahme auf untere und obere Werte begrenzt, und bei Ueberschreiten des vorgewählten Bereiches, z.Bsp. die Mahlwalzen auseinander gerückt werden.

Alle Signale eines Walzenstuhles werden bevorzugt Ober einen Maschinenrechner koordiniert und gesteuert, wobei der Maschinenrechner die benötigten Sollwerte von einem zentralen Computer mit Speicher abrufen kann. Der Positionsanzeiger wird bevorzugt mit einem Positionsgrenzwertschalter ausgerüstet, der auf vorwählbare Grenzwerte einstellbar, und auf diese Weise eine automatische Fehleinstellung verhindern kann. Der Positionsgrenzwertschafter in der gezeichneten Lage hat den Vorteil, dass auch eine Fehlhandeinstellung damit verhindert werden kann, da Handrad wie auch automatiche Verstellung eine entsprechende Wegverschiebung der Kette 118 ergeben. Der Positionsmelder kann genauso wie der Verstellmotor 119 mit einem Eingabe-Angabegerät verbunden sein, das entsprechende Signale von dem Maschinenrechner erhält, bzw. abgibt, entsprechend mit Digitalanzeige und Handeingabetasten. Im gleichen Sinne kann die Druckmess- und Anzeigevorrichtung 114, 115 an den Maschinenrechner angeschlossen werden. Je nach Ausbaugrad eines Walzwerkes könne eine oder mehrere Sicherheiten am selben Walzwerk vorgesehen werden. Wenn zum Beispiel Riffelwalzen eingebaut werden, ist die Mahldrucküberwachung weniger sinnvoll, dagegen ist die Ueberwachung des Abstandes der Mahlwalzen, sei es durch den Positionsanzeiger oder einem Distanzmesser von Vorteil. Umgekehrt liegt es bei Glattwalzen, bei denen eine Drucküberwachung mehr Vorteile bringt. Mit einem Rechner und den angedeuteten Signalleitungen soll angedeutet werden, dass der Computer, bzw. Speicher eine ganze Anzahl, gegebenenfalls alle Walzenstühle in einer Mühle steuert, und wenn erforderlich, auch Regelfunktionen koordiniert.

Als ganz besonders vorteilhaft hat es sich ferner erwiesen, dass die Digitalanzeige einen Wert entsprechend einer Zeitmessung (Uhr 05.50) angibt und vorzugsweie einen identischen Wert entsprechend einer Stellungsanzeigevorrichtung bzw. der Anzeigeuhr des Handrades wiedergibt.

Der grosse Vorteil liegt darin, dass die Erfahrungswerte von nicht-automatisierten oder nichtfernsteuerbaren Walzenstühlen verglichen und für den Aufbau oder die Verbesserung entsprechender Steuerprogramme verwertbar sind.

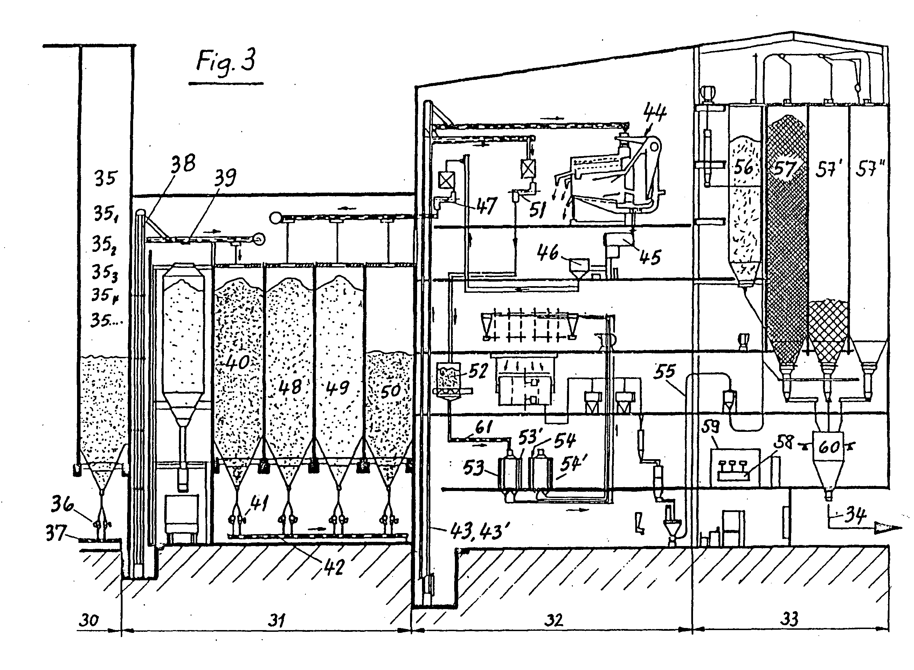

Die Fig. 3 zeigt nun eine komplette Stärkemühle stark vereinfacht dargestellt. Ganz grob betrachtet besteht die Stärkemühle aus einem Lagersilo 30 für das Lagergetreide, Misch- und Abstehkästen 31 einem eigentlichen Verarbeitungstrakt 32 sowie Fertigproduktzellen 33. Anschliessend an die Fertigproduktzellen 33 wird die Stärkefraktion direkt über Transportelemente 34 an die Stärkefabrik überführt.

Im einzelnen geht nun der Arbeitsablauf dann wie folgt: Aus Lagerzellen 35, 35₁, 35₂, 35₃ usw. wird die gewünschte Rohgetreidemischung erstellt und über Waagen 36, einen Horizontalförderer 37, einen Elevator 38, einen weiteren Horizontalförderer 39 in Mischzellen 40 gefördert. Von der Mischzelle 40 wird das noch ungereinigte Getreide abgezogen, über Waagen 41 einen Horizontalförderer 42 sowie einen Elevator 43 in die Getreidereinigung 44 gefördert. In einer Kompaktreinigung werden grosse Fremdbestandteile (Schrollen) abgesiebt, Steine ausgelesen, Schalenteile wegaspiriert. (Es wird vollinhaltlich auf die CH-PA Nr. 04 626/87-6 der Anmelderin Bezug genommen.) Anschliessend wird das Gut in einen Trieur 45 gegeben, in welchem lange und runde Fremdsämereien entfernt werden, über eine Scheuermaschine 46 das Korngut von anhaftendem Schmutz befreit, die erforderliche Wassermenge in einer Intensivnetzeinrichtung 47 beigegeben und in einer Abstehzelle 48 für die erforderliche Zeit eingelagert. Das genetzte und etwa 12 bis 48 Stunden abgestandene Getreide wird aus einer der Abstehzellen 48, 49, resp. 50 entnommen, über einen Elevator 43' überhoben und nach einer Zugabe von 0,1 bis 0.3 % Wasser (die Netzung 51 vor B₁) und einer Homogenisierzelle 52 direkt der ersten Mahlpassage (B₁) resp. der ersten Doppelmahlpassage, 53 zugeführt. Nach viermaliger Doppelvermahlung 53, 53', 54, 54' und je einer, (total vier) Sichtpassagen, werden die gewonnenen Fraktionen über ein pneumatisches Fördersystem 55 weggeführt, Kleie in ein Lagersilo 56, die Stärkefratkion in einem der Lagersilos 57, 57' oder 57" eingelagert. Nach anschliessender Verwiegung (Waage 60) wird das Gut über den Transportelementen 34 in die Stärkefabrik gefördert. Die gesamte Anlagesteuerung und Verriegelung sowie den Rechnermitteln 58 ist in einem Steuerraum 59 untergebracht.

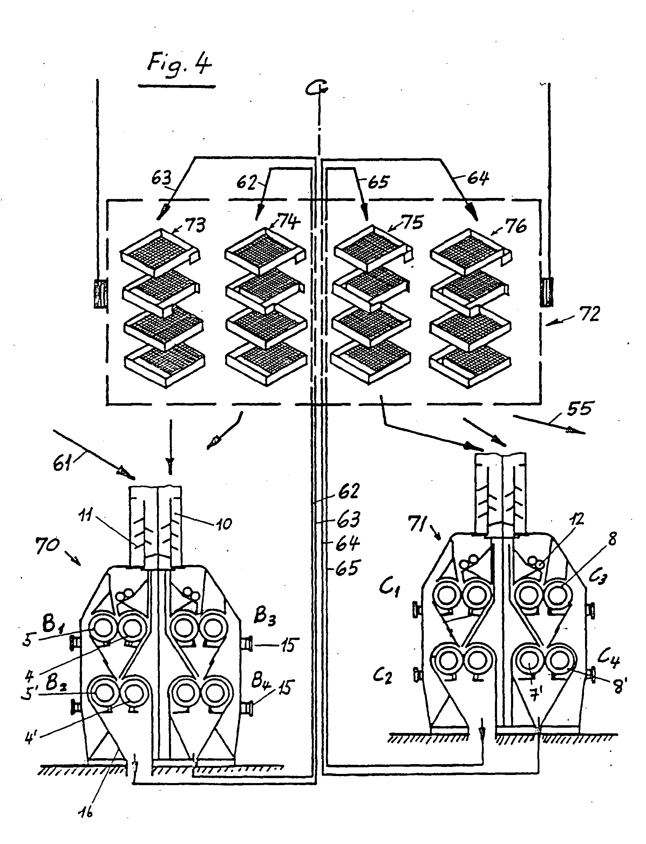

In der Figur 4 ist nun das eigentliche Herzstück der Stärkemühle, wobei die Mahl- und Sichtpassagen vergrössert dargestellt sind. Es handelt sich dabei um ein Modul einer Mühlenleistung von 100 bis 200 Tonnen Tagesleistung. Dafür sind zwei Achtwalzwerke 70, resp. 71, sowie ein Grossplansichter 72 erforderlich. Das erste Achtwalzwerk 70 enthält die Mahlpassagen B₁ und B₂ als erste Doppelpassage, B₃, B₄ als zweite Doppelpassage. Das zweite Achtwalzwerk enthält Mahlpassagen C₁, C₂ als erste Doppelpassage und C₃, C₄ als zweite Doppelpassage, also total vier Doppelmahlpassagen. Der Plansichter 72 stellt an sich eine einzige schwingende Einheit dar. Es sind vier senkrecht übereinander liegende Siebabteile 73, 74, 75, 76 dargestellt, wobei die Produktläufe nur ganz schematisch dargestellt sind. Der Plansichter kann aber völlig andere Einteilungen aufweisen, also auch sechs oder acht senkrecht angeordnete Siebabteile. Jedes senkrechte Siebabteil kann zweifach oder mehrfach in der Höhe unterteilt sein, sei es für Doppelläufe oder für eine andere Produktführung entsprechend einer Optimierung der Sichterausnützung. Ebenfalls nur schematisch ist der erste Zulauf 61 von unvermahlenem Korngut an B₁, Zwischenüberhebungen 62, 63, 64, 65 sowie mit einem ausgezogenen Pfeil 55 das Abfördersystem mit der guten Stärkefraktion dargestellt.

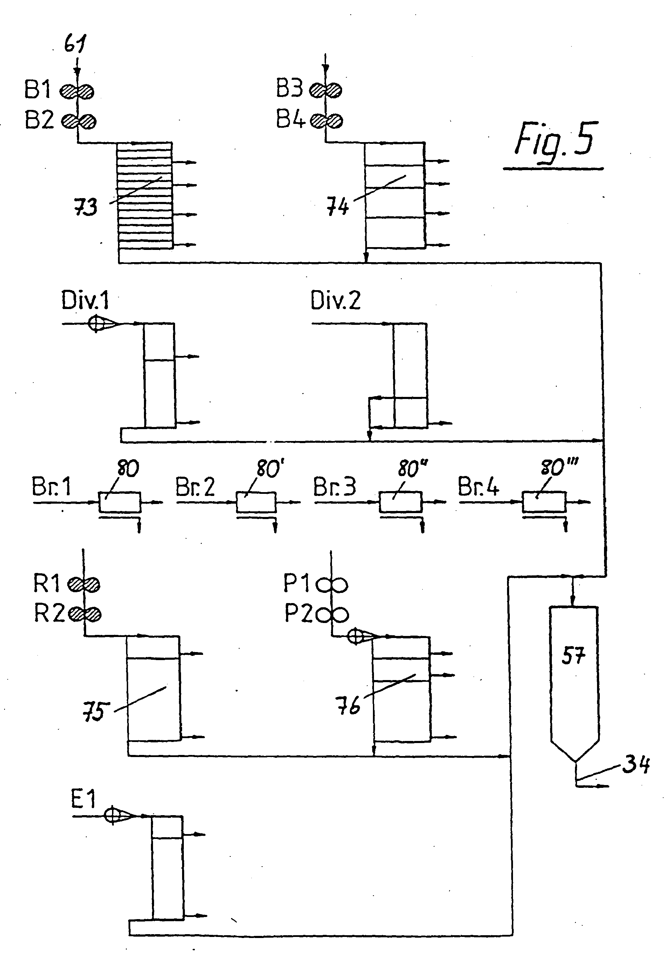

Die Figur 5 zeigt nun ein müllerisches Verfahrensdiagramm sinngemäss dargestellt, wie die in der DE-PS 26 42 628 gezeigte Lösung des Standes der Technik. Ersichtlich ist neu sowohl die Zahl der Sichtpassagen wie auch die zahl der Mahlpassagen drastisch reduziert. Geblieben sind jedoch vier Kleiebürsten 80 zur Erhöhung der Ausbeute an Endospermfraktionen.

Die vorbereitete Rohfrucht Weizen wird auf das erste Mahlwalzenpaar B₁ gespiesen. Das von B₁ erzeugte erste Schrot bzw. das aufgebrochene Korn geht von hier unmittelbar auf das zweite Mahlwalzenpaar, auf B₂, ohne Siebung zwischen B₁ und B₂. Nach der zweiten Vermahlung wird das gewonnene sogenannte zweite Schrot auf das erste Siebabteil 73 geführt. Von den Plansieben des Siebabteiles 73 wird das zweite Schrot in verschiedene Granulationen aufgeteilt, wobei die für B₃ bestimmte Fraktion vorgängig über eine Br.₁ einer ersten Kleiebürste (80) geführt und der Abstoss dann direkt in die dritte Vermahlung B₃ übergeben wird. Das hier noch immer in der Form von Schrot vorliegende Gut wird über B₃ und unmittelbar danach über B₄ vermahlen. Das nun in der zweiten Doppelvermahlung erzeugte B₄-Schrot geht auf das zweite Sichtabteil 74, wobei das Gut wiederum in mehrere Granulationen aufgeteilt wird.

Ein Teil der Fraktion von der ersten wie der zweiten Sichtpassage wird auf Diviseure Div. 1, Div. 2 gegeben, welche eine noch feinere Granulation herstellen.

Die groben Abstösse sowohl der ersten wie der zweiten Siebpassage (von Siebabteilen 73 und 74) werden nach den jeweils gegebenen Verhältnissen auf die entsprechenden Kleiebürsten 80 (Br.₁, Br.₂, Br.₃, Br.₄) geleitet. Der Abstoss von dem Diviseur (Div. 1) geht direkt auf die ersten Reduktionspassagen R₁ (C₁). Von hier wird das Gut wiederum ohne Zwischensichtung direkt der zweiten Reduktionspassage R₂ (C₂) zugeleitet und das durch R₂ reduzierte Produkt unmittelbar auf ein drittes Sichtabteil 75 gegeben.

Das in der dritten Siebpassage anfallende Griess, bzw. Dunst wird anschliessend auf die vierte Reduktionspassage P₁ (C₃) und gleich danach die zweite Stufe der gleichen Reduktionspassage P₂ (C₄) gegeben, und den anfallenden, verfeinerten Dunst gibt man in das vierte Sichtabteil 76. Der Abstoss der vierten Sichtpassage 76 wird zusätzlich in einer Prallmühle E₁ zerschlagen und direkt auf ein nachfolgendes Sichterabteil geführt.

Von den Sichtabteilen geht die Feinstfraktion (der unterste Durchfall) ebenso wie der unterste Durchfall aller übrigen Siebteile als Fertigprodukt in das Zwischenlager 57 bis 57" und steht bereit für die Verarbeitung in der Stärkemühle.

Zwischen den Ausmahldoppelpassagen R₁ - R₂ bzw. P₁ - P₂ und dem entsprechenden Sichterabteil 75 bzw. 76 kann es von Vorteil sein, noch einen Detacheur (zur Auflösung der Flocken) - symbolisch mit Kreis und Kegel bezeichnet - einzusetzen.

## Patentansprüche

1. Verfahren zur Herstellung eines Stärkerohmaterials für die anschließende Gewinnung von reiner Stärke aus Weizen, bei welchem
(a) aus dem Gut Fraktionen von möglichst wenig geschädigter Stärke durch wiederholte Walzenvermahlung und Siebung nach dem System der Hochmüllerei hergestellt werden,
**dadurch gekennzeichnet, daß**
(b) das Gut wenigstens zweimal über Walzen-Doppelmahlstufen geführt wird, ohne daß dabei zwischen den in je-der Walzen-Doppelmahlstufe durchgeführten beiden Walzen-Vermahlungen gesiebt wird, und
(c) erst anschließend an die in jeder Walzen-Doppelmahlstufe stattfindende Walzen-Doppelvermahlung gesiebt wird.

2. Verfahren nach Patentanspruch 1, **dadurch gekennzeichnet, daß** das Gut viermal über Walzen-Doppelmahlstufen geführt wird.

3. Verfahren nach einem der vorstehenden Patentansprüche, **dadurch gekennzeichnet, daß** insbesondere für die Ausmahlung drei bis fünf einfache Vermahlungen mit je einer Zwischensiebung vorgenommen werden.

4. Verfahren nach einem der vorstehenden Patentansprüche, **dadurch gekennzeichnet, daß** das Gut zumindest bei B₁/B₂, B₃/B_{4,} C₁/C₂ und C₃/C₄ doppelt vermahlen wird.

## Claims

1. Process for the production of a raw starch material for the subsequent obtaining of pure starch from wheat,
wherein:
a) fractions of starch which is damaged as little as possible are produced from the material by repeated roller grinding and screening using the high grinding system,
**characterised in that**
b) the material is taken at least twice through double roller grinding stages, without effecting screening between the two roller grindings effected in each double roller grinding stage, and
c) screening is effected only subsequently to the double roller grinding which occurs in each double roller grinding stage.

2. Process according to claim 1, **characterised in that** the material is taken four times through double roller grinding stages.

3. Process according to one of the preceding claims, **characterised in that** more particularly for the reductions three to five single grindings are carried out, with an intermediate screening in each case.

4. Process according to one of the preceding claims, **characterised in that** double grinding of the material is effected at least at B₁/B₂, B₃/B₄, C₁/C₂ and C₃/C₄.

## Revendications

1. Procédé de fabrication d'amidon brut pour la production ultérieure d'amidon pur à partir de blé, avec lequel
a) on fabrique à partir de la matière des fractions d'amidon le moins endommagé possible par mouture avec cylindres et tamisage répétés selon le système de la haute minoterie,
**caractérisé en ce que**
b) la matière est amenée au moins deux fois par des doubles niveaux de broyage avec cylindres sans qu'on tamise entre les deux moutures avec cylindres effectuées dans chaque niveau double de broyage avec cylindres;
c) et **en ce qu'**on tamise seulement à la suite de la double mouture avec cylindres qui a lieu dans chaque double niveau de broyage avec cylindres.

2. Procédé selon la revendication 1, **caractérisé en ce que** la matière est amenée quatre fois par des doubles niveaux de broyage avec cylindres.

3. Procédé selon l'une des revendications susmentionnées ci-dessus, **caractérisé en ce que** trois à cinq moutures simples sont effectuées avec un tamisage intermédiaire à chaque fois, notamment pour la mouture intégrale.

4. Procédé selon l'une des revendications ci-dessus, **caractérisé en ce que** la matière est moulue deux fois tout du moins avec B₁/B₂, B₃/B₄, C₁/C₂ et C₃/C₄.
